# EUROPEAN PATENT SPECIFICATION

(11) **EP 1 294 990 B1**
(45) Date of publication and mention of the grant of the patent: **05.01.2005**
(21) Application number: 01936690.5
(22) Date of filing: 12.06.2001
(51) Int. Cl.: E01C 23/03

(54) **IMPROVED DISPENSERS**
VERBESSERTER SPENDER
DISTRIBUTEURS AMELIORES

(30) Priority: 17.06.2000 GB 0014767
(43) Date of publication of application: 26.03.2003
(73) Proprietor: Gent, Keith Andrew, Norfolk NR24 2RS (GB)
(72) Inventor: Gent, Keith Andrew, Norfolk NR24 2RS (GB)
(74) Representative: Dunnett, Julie Elizabeth
(86) International application number: PCT/GB2001/002578
(87) International publication number: WO 2001/098590

(56) References cited:
- FR-A- 2 278 245
- GB-A- 2 337 039
- US-A- 4 705 229
- US-A- 4 793 731

## Description

This invention is concerned with improved dispensers, and relates in particular to tractor-drawn dispensers suitable for use with rolls of sheet material such as that GCL sheeting used in the lining or capping of tips, reservoirs, contaminated land and the like.

In my British Patent Specification No: 2,337,039 (P1543Sub) there is discussed the problem of the disposal of rubbish (trash, garbage), and other waste materials, and how it is presently the practice to transport all rubbish to, and dump it at, some central site where there is a dump - or "tip" - in the form of a pit specially dug and designated for this purpose. In accordance with the regulations, every such pit must be so lined that nothing can seep down into the underlying ground, and so pollute the surroundings, and once full, and before earth can be laid on top and the whole landscaped, it is necessary to seal off the top.

A modern pit can vary in size from 25,000sq.m (2.5 hectares, or about 6.25 acre) for a small pit up to 80,000sq.m (8ha, or about 20 acre) and beyond for a larger one - the latter are usually made up of a number of smaller pits, or "cells". Typically, such a pit has first a compacted surface on top of which is a compacted sand layer with a flat and smooth surface, and on top of the sand there must be laid an impervious lining layer - such as that known as a geosynthetic clay liner, or GCL. It may also be necessary to employ, over or under this, a thick, durable plastic sheet layer, the sheeting being of the type known as a geotextile. Both clay liners and geotextiles come in the form of rolls each of which is a ribbon-like sheet of material (known, when deployed, as a "panel") from 3.5-5m (12-16.5ft) wide, from 40-45m (135-150ft) long, and about 100-110mm (0.4-0.45in) thick. They can weigh, depending on the material, anywhere from 1000-1450kg (about 2,200-3,2001b, or about a ton to a ton and a half). These are laid down with an overlap - normally of around 15-22.5mm (6-9in) - and getting the overlap right so that it is large enough to form a satisfactory seal but not so large as to waste significant amounts of material can save quite a lot of money.

In the past this laying has commonly been accomplished by the simple but effective means of threading the roll onto a support rod, attaching the rod by chains at each end to a rigid beam, mounting the beam (again with chains) to the bucket of a JCB - or a tracked 360 excavator, which is preferred if the ground is not to be churned up - and then carrying the roll along, letting the sheet liner pay out. Unfortunately this method, though uncomplicated, is not especially accurate - and the earlier invention the subject of my aforementioned Specification provides a better form of dispenser apparatus that can be "rigidly" attached to a tractor's (conventional) three-point mounting - a single, upper, pivot mounting that can be raised or lowered by the tractor's normal hydraulic system so as similarly to raise or lower whatever the mounting is carrying, and a pair of laterally-separated lower "floating" rigid link arms pivotally attached at their inboard ends to the tractor for slight sideways movement. More specifically, my earlier invention proposes a long beam, or framework of beams, having roughly centrally thereof a three-point mounting by which it can be attached behind a tractor clear of the ground, the beam having normally-disposed end plates between which there may be borne a support rod carrying a roll of liner material. The beam is associated with positioning control means that can be used to adjust the lateral angle of the lower three-point mounting linkages, and so move the roll to either side to modify where the liner is laid.

Because rolls come in different widths, depending on their precise purpose and cost, it is desirable to arrange for the width of the dispenser - the length of the beam - to be adjustable so that it can more easily and efficiently cater for the several different rolls. To this end the beam - or each individual beam making up the length of the framework - is "telescopic", it comprising a hollow, tubular main beam having slidably mounted therewithin at each end small (short) end beam portions that can be moved in or out of the main beam, and then fixed in place, so as to alter the overall length of the whole beam. In my earlier form of dispenser the outer, main, beam has at each end a sequence of holes extending along the beam, and each end beam portion has at its inboard end (the end that fits within the main beam) a single matching hole, so that each end beam portion once positioned can conveniently be fixed in place by a securing pin inserted through the relevant aligned holes. This method of changing the effective length of the beam, while perfectly adequate, is rather time-consuming, and it is one feature of the present invention that the end beams are moved in and out by a hydraulic ram mounted between the main beam and the end plates to which the end beams are secured.

This use of ram-driven end beams has a surprising consequence, which is that if the bottom of each end plate be provided with an inwardly-directed spigot (so that the two spigots point towards each other) then it is no longer necessary to employ a long support rod threaded through the roll. Instead, the spacing of the end plates having first been increased (by the ram driving the end beams out) until the roll fits between them (and between the opposed spigots), the spigots can be directed into the hole through the roll as the rams draw back the end plates to the correct spacing, and so provide the required support in place of the rod.

This invention provides a tractor-mountable dispenser for a roll of material such as a geosynthetic clay liner or a geotextile fabric, the dispenser comprising:
an elongate beam, or framework of beams, having roughly centrally thereof a three-point mounting by which the beam or framework can be attached to the tractor so as to extend laterally therebehind;
the beam carrying at either end a plate having inwardly-directed roll-mounting spigot means such that in use the roll of material may be borne thereon and between the end plates;
the beam being associated with positioning control means that can in operation be used to move the roll to one side or the other to modify where, in use, the liner is laid; wherein;
the beam, or each individual beam making up the length of the framework, is telescopic and comprises a central portion and two end plate portions;
and the dispenser also comprises two independently controlled extension/retraction drive means, each operatively connected to a respective end plate portion by which the end plates can in operation be spaced apart sufficiently far that the spigot means can be inserted into the ends of the roll, and the plates then retracted to position the spigot means within the roll so as to support the roll, each end plate being moveable independently with respect to the central portion of the beam.

It will be seen that the dispenser of the present invention is basically like that of the earlier invention, save that it has driving means that telescope the main beam, and that spigot means - spigots - on the end plates project into, and so support, the roll.

Although for the most part herein the invention is discussed in relation to the lining or capping of a pit for rubbish, refuse and the like, it may in fact also be of use in the lining or capping of other container-like holes in the ground. For example, modern water reservoirs need to be lined to stop their contents leaking away, and the dispenser of the invention can be used to lay such a lining. Again, in some countries it may be desirable to store crude oil in giant pits, or perhaps to place surface storage tanks in safety pits to contain any leakage, and obviously it is extremely important to ensure that the pits are sufficiently well lined and/or capped to prevent oil seeping into the surroundings.

The invention provides a tractor-mountable dispenser. The tractor employed to carry the dispenser may be of any type - a suitably-shod conventional agricultural tractor or loading shovel, for example, or a tracked crawler of some sort - provided, of course, that it has a suitable three-point mounting. As noted above, a conventional such three-point mounting comprises a single, upper, pivot mounting with an adjustable-length link and a pair of laterally-separated lower rigid link arms pivotally attached at their inboard ends to the tractor both for vertical movement and for slight sideways movement, which lower arms can be raised or lowered by the tractor's normal hydraulic system so as to raise or lower whatever the mounting is carrying. It is normal for the sideways movement to be restricted by a chain on the outside of each lower arm; as is discussed further hereinafter, in the employment of the preferred forms of the dispenser of the invention these chains are removed, one of them being replaced by a hydraulic ram that can be used to drive the arm, and thus the dispenser, from side to side.

Bearing in mind the regulations regarding the smoothness of a tip's underlying surface, one important point about the tractor to note here is that it must be equipped with tyres, or other ground-contacting drive and support means (such as tracks), that do not leave significant marks or indentations in the ground formation surface of the tip. For the most part standard low flotation tyres as are commonly used on tractors on soft, boggy ground, and preferably with a tread not more than about 5mm (0.25in) deep, are perfectly satisfactory.

The invention's dispenser is for dispensing a roll of material such as a geosynthetic clay liner (GCL), a geotextile fabric, or whatever is appropriate to the particular task at hand, and naturally, the roll may be of any suitable size.

The dispenser of the invention is an elongate beam, or beam framework, having a three-point mounting and carrying at either end a plate having inwardly-directed roll-mounting spigot means such that in use the roll of material may be borne thereon and between the end plates. Although the dispenser could have only a single beam - it is quite possible to provide such a beam made of square-section mild steel tube, say, and strong enough to carry the roll and rigid enough to allow satisfactory distribution therefrom - it is much more convenient to construct the dispenser as a framework of beams, and typically as part of a "box" framework wherein the end plates form two opposed (side) faces of the box and the top surface of the box is defined by a pair of spaced parallel telescopic beams suitably elongated to provide the length appropriate for the chosen roll and perhaps with one or more bracing cross strut. For use with a roll 4m long and 0.5m diameter (about 13.5ft by 1.75ft) long such a framework might be 4.2m long and 0.75m wide and deep (about 14ft by 2.5ft by 2.5ft). The individual beams making up the framework are conveniently square-section mild steel tube around 100x100mm and 10mm thick (about 4x4in, 0.5in thick), suitable welded to the end plates, which are themselves 10mm (0.5in) mild steel plate.

Hereinafter, and unless the context clearly indicates otherwise, the term "beam" is used both to mean a single beam and to mean the beam part of a framework.

Because rolls come in different widths, depending on their precise purpose and cost, the width of the dispenser - the length of the beam - is adjustable so that it can more easily and efficiently cater for the several different rolls. To this end the end plate portions of each beam - or each individual beam making up the length of the framework - are slidably mounted in opposite ends of the central portion and can be moved in or out of the central portion, and then fixed in place, so as to alter the overall length of the whole beam. Each end plate is then mounted on the outboard end of the end plate portion.

The telescopic beam (or beams) making up the length of the framework is driven by powered extension/retraction means. Each means - and it is preferable to have two such means, one for each end plate, operating independently - could be whatever is suitable - a small electric motor driving a rack-and-pinion system, for example - but it is most conveniently a conventional hydraulically-operated (piston-in-cylinder) ram. Each means is mounted between the central portion of the beam and the associated end plate. With a piston-in-cylinder ram, the ram body is mounted on the central portion of the beam, and the ram rod extending from the piston in the body is mounted to the associated end plate. Such a hydraulic system can be driven from the tractor's hydraulics.

Although a single ram system could be used (at each end) with a throw long enough to allow a roll of almost any width - that is to say, the length of the axis of the roll - to be fitted to the dispenser, it is convenient, and much less expensive, to use a short throw ram and to move it bodily along the main beam, from one mounting point to another, so as to accommodate widely different roll widths.

The telescoping driving means needs a control arrangement - and preferably such an arrangement as can be utilised by an Operator standing just behind and to one side of the dispenser, and gauging by eye the accuracy with which spigots are positioned to enter the roll. Advantageously, this control arrangement is a conventional lever-operated switch - a hydraulic switch, say - operatively connected to the driver and mounted at the rear and side of the beam - and one on each side is obviously desirable, so that the Operator may be at first one side and then the other to "guide" each spigot into the roll.

Each end plate carries an inwardly-directed roll-mounting spigot means (spigots) such that in use the roll of material may be borne thereon and between the end plates. In operation the beam is extended until the end plates are spaced apart sufficiently far that the spigots can be inserted into the ends of the rolls, and the plates are then retracted to position the spigots within the roll so as to support the roll. Each spigot may be nothing more than a structurally stiff rod securely mounted on the inner face of the end plate. Most preferably, however, each spigot is effectively in two parts, an inner rod mounted to the end plate and carrying on bearings therearound an outer sleeve that fits into the hollow space within the roll.

The dispenser of the invention is tractor-mountable, and on the beam there is a three-point mounting - one upper mounting and two spaced lower mountings positioned symmetrically either side of the upper one - by which it can be attached to the tractor so as to extend laterally therebehind. In itself there is nothing particular special about this mounting, which is such as might be found on any agricultural implement, and so it need no further comment here. However, in order to enable the beam to be lifted well clear of the ground for when it is to be loaded with a fresh roll, and for carrying the roll to the place where it is to be laid, it may be desirable to have the bottom mountings set relatively low - that is, somewhat lower than would usually be the case for an agricultural implement to be mounted on a tractor this way.

The three-point mounting is conveniently roughly central of the beam in its length direction, so that the roll it carries is similarly central of the tractor. It might, though, be desirable to offset the mounting, and thus the roll, to one side or another, so the expression "roughly central" can be interpreted quite widely. For example, the mounting might be 30cm (a foot or so) to one side.

The beam in the invention's dispenser has at either end a plate having rod-mounting spigot means such that the roll of material may be borne thereby between the end plates. The beam being telescopic, each plate is actually carried on the relevant smaller end beam portion. The plate - although the term "plate" might imply a solid object, and in fact the plate preferably is a solid plate, it could itself be in the form of a framework - is disposed generally normal to the beam (the exact angle is not especially relevant) and is of such a size and shape, and so positioned relative to the beam, that, with the roll in place between the end plates, the roll is clear of the beam, and free to rotate on or with the spigots as the material is dispensed therefrom.

As noted hereinbefore, it is a particularly advantageous feature of the invention that the beam be associated with positioning control means that can in operation be used to effect adjustment of the lateral angle of the lower linkages of the tractor's three-point mounting, and thus to move the roll to one side or the other to modify where, in use, the liner is laid. First, there is needed a driver device for effecting this movement, and conveniently such a device is a hydraulic ram taking the place of one of the movement-restriction chains usually employed with the arms, which ram is powered by the tractor's hydraulic system. Then there is needed a control arrangement - and preferably such an arrangement as can be utilised by an Operator walking along just behind and to one side of the dispenser, and gauging by eye the accuracy with which the roll material is being laid. Advantageously, then, this control arrangement is a conventional lever-operated hydraulic switch operatively connected to the ram and mounted at the rear and side of the beam - and one on each side is obviously desirable, so that the Operator may be at whichever side is where there is being formed the overlapping seam of the liner being laid on that previously laid.

Conveniently, the dispenser of the invention is associated with some metering means whereby there may be determined what length of material has been dispensed from the roll, and thus how much is left. Such a meter can be driven directly from the rotation of the roll (or of the outer sleeve of one of the spigots on which the roll is mounted), much like a car or bicycle odometer is driven by rotation of the wheels or drive chain.

As so far described the invention is a dispenser for a single roll of material. There is no reason, however, why the dispenser should not handle two, or more, rolls at once, each roll being similarly mounted between the end plates. Indeed, for some purposes a two-roll dispenser might be ideal - for example, there might be distributed as the bottom layer (from one roll) a liner that is physically very strong but not necessarily impenetrable by water (or some other liquid), and this could, effectively simultaneously, be itself covered (from the second roll) by a layer of a less robust but totally liquid-blocking material - or, of course, *vice versa.*

As noted above, it is important, when laying a liner in a tip, reservoir or the like, not to mark the smooth surface of the underlying ground formation, and any undesirable marking can be avoided, or at least mitigated, by using a tracked vehicle or low flotation tyres (preferably without tread). However, if despite this the surface is marked, it may be possible to smooth it out immediately prior to laying the liner by the simply expedient of mounting just behind the tractor, or on the dispenser but just ahead of the roll being laid, a roller that will take out or level any indentations.

An embodiment of the invention is now described, though by way of illustration only, with reference to the accompanying diagrammatic Drawings in which:
- Figure 1: shows a view of a cell - a hole to be filled - of a rubbish tip being lined in the known manner using a loading shovel;
- Figure 2: shows a perspective view of a tractor equipped to lay a liner using a dispenser in accordance with the earlier invention;
- Figure 3: shows a perspective view of one end of a dispenser of the earlier invention, and similar to that shown in Figure 3;
- Figure 4: shows a perspective view similar to that of Figure 3 but of one end of a dispenser of the present invention;
- Figure 5: shows a top plan view of the dispenser end shown in Figure 4; and
- Figure 6: shows a top plan view of the whole of the dispenser of the earlier invention, attached to a tractor.

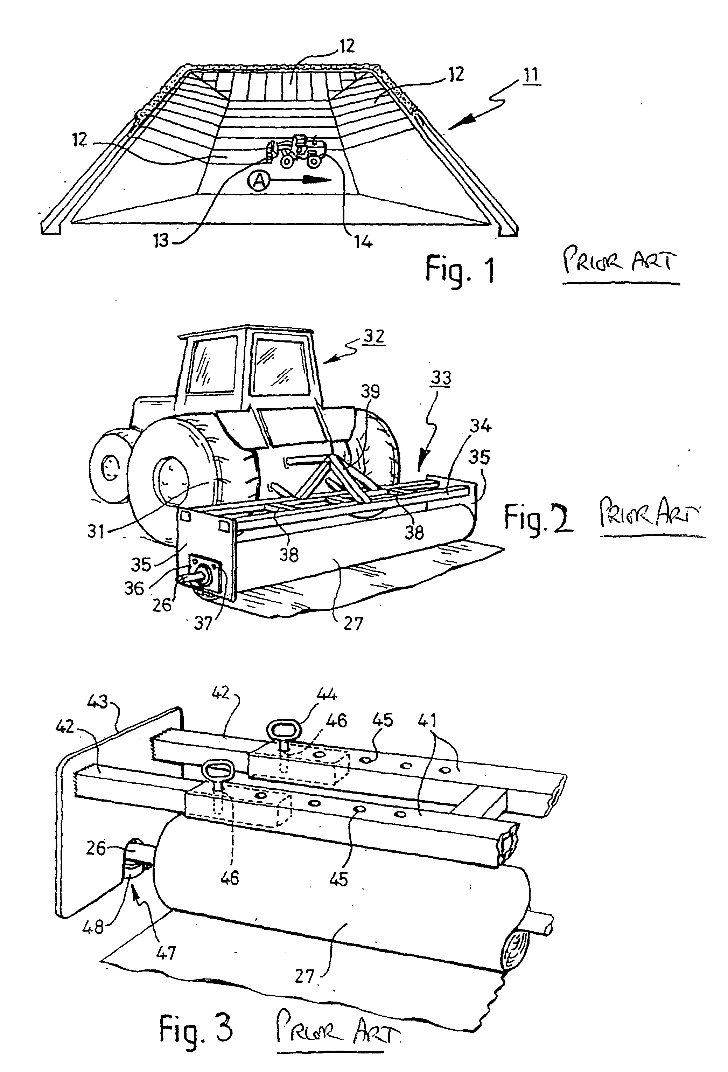

Figure 1 shows a view of a cell of a rubbish tip pit (generally 11) being lined in the known manner with the use of a loading shovel to carry the roll of lining material. It is not to scale - in reality the cell is much larger, and the loading shovel much smaller - but it serves to illustrate how the liner is laid in strips (as 12) pulled out from a roll (13) mounted on the front of a loading shovel (14: the loading shovel is moving backwards, in the direction of arrow A, paying out the strip as it goes, with the driver manoeuvring as he proceeds in order to keep the strip straight and correctly overlapping the previously-laid adjacent strip).

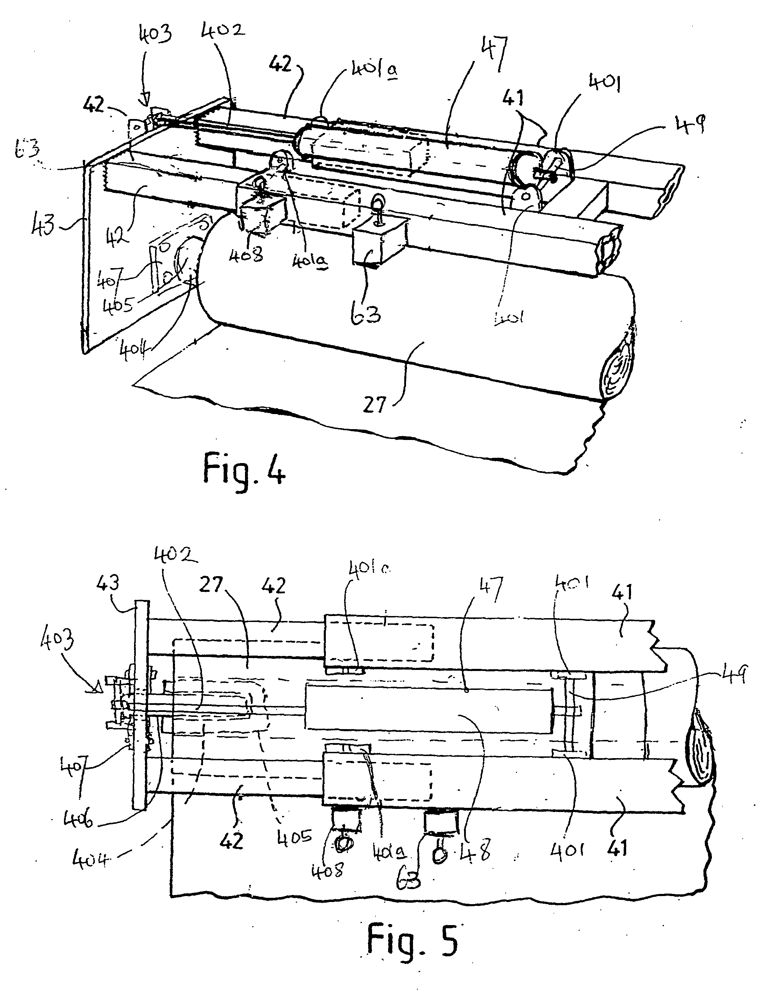

Figure 2 shows a perspective view of a conventional tractor having a rear-mounted three-point implement mounting system and equipped to lay a liner using a dispenser in accordance with the earlier invention. Fitted with balloon, or low flotation, tyres (31) the tractor (generally 32) carries on its rear mounting a framework dispenser (generally 33) of the invention. The framework has two square-section main beams (34) extending laterally across the full width of the tractor 32 (and tyres 31) and beyond, and at each end of the beams is a normally-disposed end plate (35) to which the beams 34 are welded. Centrally of each end plate 35, but nearer the bottom (as viewed) edge thereof, is an inverted U-shaped slot (not shown in this Figure) through which passes the rod 26 supporting a roll 27 of liner. The rod 26 is retained in the slot by an apertured end capping plate (36) which is affixed by nuts/bolts (37) to the end plate 35 and through the aperture of which passes the rod 26.

The framework of beams 34 is cross-braced by struts (38), and has three-point mounting struts (39) forming the mounting points by which it is attached to the tractors three-point mounting system.

Figure 3 shows a perspective view of one end of a dispenser of the earlier invention, and similar to but not the same as that shown in Figure 2. In this Figure can clearly be seen the use of hollow square-section telescopic beams - two fore and aft main beams (41) each ending at each end (though only one end is shown in Figures 4 and 5) in a smaller beam portion (42) mounted slidably within the main beam 41. The end plate (43) is welded to the "free" ends of the smaller beam portions 42, and its position relative to the main beams 41 - and thus to the similar end plate (not shown) welded at the "free" end of the small beam portions other end of the main beams 41 (not shown) - may be adjusted by sliding the smaller beam portions in, or out (as appropriate) and then locking them in place with the hand pins (44) passing through mating holes (as 45, 46) in the main beam 41 and in the small beam portions 42.

Figure 4 shows a perspective view of one end of a dispenser of the *present* invention, and similar to the earlier invention as shown in Figure 3.

In Figure 4 there are again the hollow square-section telescopic beams - two fore and aft main beams 41 each ending in a smaller beam portion 42 mounted slidably within the main beam 41. Again, the end plate 43 is welded to the "free" ends of the smaller beam portions 42, and its position relative to the main beams 41 may be adjusted by sliding the smaller beam portions in, or out (as appropriate). However, here, rather than using hand pins passing through mating holes in the main beam 41 and in the small beam portions 42, the end beams 42 are driven by a hydraulic ram (47: for reasons of clarity the ram's hydraulic lines are not shown here) the cylinder (48) of which is attached at its rear to a bar (49) passing between two small lugs (401) upstanding from the main beams 41 and the piston rod (402) of which is attached to a similar bar and lug pair (403) mounted on the outside surface of the end plate 43. There are in fact two pairs of lugs, an inner pair 401 and an outer pair (401a). For short rolls the ram's cylinder 48 is mounted, as shown, on the inner pair, but for longer rolls it is moved bodily along and mounted on the outer pair. The ram is controlled by a stick switch (408) mounted on the rear beam 41 near its end (and of course there is a matching switch at the other end). The hydraulic lines for this switch are for clarity not shown here.

In this embodiment the roll 27 is supported not on a rod slotted into a slot in the bottom edge of each end plate, but instead on spigots (generally 404) mounted on and projecting inwardly from near the lower edge of the inner face of the end plates 43. As best seen in Figure 5, each spigot 404 is a sleeve 405 mounted on bearings (not shown) on a central rod (406) the outer end of which is mounted in a support structure (407) on the end plate 43.

In use, a roll of material 27 is mounted by operating the ram 47 to drive the end plates 43 out so that the free ends of the spigots 404 are beyond the ends of the roll, aligning the spigots with the roll's axial hole, and then operating the ram to retract the end plates (using a suitable manually-operated hydraulic switch mounted on the end plates, but for clarity not shown here), the spigots passing into the axial hole as this is done, leaving the roll mounted on, and rotatable with, the spigots.

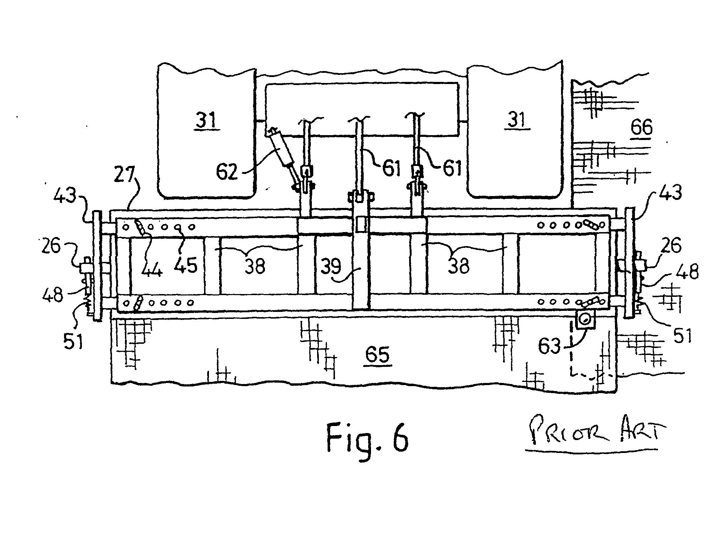

A top plan view of the whole of the dispenser of the earlier invention, attached to a tractor, is shown in Figure 6.

From Figure 6 can be seen the three-point linkage (61: one upper, two lower rigid connections) to the tractor's three-point mounting, together with a hydraulic ram (62) mounted between the tractor and one of the link arms 61 and operated by a control stick (63) mounted to the rear and inboard of the right-hand (as viewed) end plate 43. This enables an Operator walking along behind and to the right of the dispenser to "steer" the dispenser, so as to adjust the overlap (64) of the liner (65) being laid on top of the previously-laid liner (66). If the ram pushes out, the dispenser is moved slightly to the right (as viewed); if it pulls in, the adjusting movement is to the left.

## Claims

1. A tractor-mountable dispenser for a roll of material (27) such as a geosynthetic clay liner (65) or a geotextile fabric, the dispenser comprising:
an elongate beam (41,42), or framework of beams (41,42), having roughly centrally thereof a three-point mounting (39) by which the beam (41,42) or framework (41,42) can be attached to the tractor (32) so as to extend laterally therebehind;
the beam (41,42) carrying at either end a plate (43) having inwardly-directed roll-mounting spigot means (404) such that in use the roll of material (27) may be borne thereon and between the end plates (43);
the beam (41,42) being associated with positioning control means (61,62) that can in operation be used to effect adjustment of the lateral angle of the lower linkages of the tractor's three-point mounting, and thus to move the roll (27) to one side or the other to modify where, in use, the liner (65) is laid; **characterised in that**;
each individual beam (41,42) making up the length of the framework is telescopic, comprises a central portion (41) and two end plate portions (42);
and the dispenser also comprises two independently controlled extension/retraction drive means (47,48), each operatively connected to a respective end plate portion (42) by which the end plates (43) can in operation be spaced apart sufficiently far that the spigot means (404) can be inserted into the ends of the roll (27), and the plates (43) then retracted to position the spigot means (404) within the roll (27) so as to support the roll (27), each end plate (43) being moveable independently with respect to the central portion (41) of the beam.

2. A dispenser as claimed in Claim 1 which is a box framework of beams (41,42) wherein the end plates (43) form two opposed (side) faces of the box and a top surface of the box is defined by a pair of spaced parallel beams (41,42) suitably elongated to provide the length appropriate for the chosen roll (27).

3. A dispenser as claimed in either of the preceding Claims, wherein the end plate portions (42) are slidably mounted within opposite ends of the central portion (41) such that the end plate portions (42) can be moved in or out of the central portion (41), and then fixed in place, so as to alter the overall length of the whole beam (41,42) so that it can more easily and efficiently cater for several different rolls.

4. A dispenser as claimed in any of the preceding Claims, wherein each telescopic beam-driving extension/retraction means (47,48) is a hydraulically-operated (piston-in-cylinder) ram (47,48), and the ram body (48) is mounted on the central portion of the beam (41) while the ram rod (402) extending from the piston (47) in the body (48) is mounted to the end plate (43) to which the relevant end beam(s) (42) is attached.

5. A dispenser as claimed in Claim 4, wherein each ram system (47,48) uses a short throw ram, and can be moved bodily along the central portion of the beam (41), from one mounting point to another, so as to accommodate widely different roll widths.

6. A dispenser as claimed in any of the preceding Claims, wherein each end-plate-borne spigot (404) is effectively in two parts, an inner rod (404) mounted to the end plate (43) and carrying on bearings therearound an outer sleeve (405) that fits into the hollow space within the roll (27).

7. A dispenser as claimed in any of the preceding Claims, wherein the three-point mounting (39) centrally of the beam (41) in its length direction is within 30 cm (one foot) to either side of the actual centre.

8. A dispenser as claimed in any of the preceding Claims, wherein the positioning control means (61,62) that can in operation be used to effect adjustment of the lateral angle of the lower linkages of the tractor's three-point mounting, and thus to move the roll (27) to one side or the other to modify where, in use, the liner (65) is laid, includes as a driver device a hydraulic ram (62) taking the place of one of the movement-restriction chains usually employed with the three-point mounting's arms, which ram (62) is associated with a control arrangement in the form of a conventional lever-operated hydraulic switch (63) operatively connected to the ram (62) and mounted at the rear and side of the beam (61).

9. A dispenser as claimed in any of the preceding Claims, which includes metering means whereby there may be determined what length of material has been dispensed from the roll (27), and thus how much is left.

10. A dispenser as claimed in any of the preceding Claims which is equipped to handle two or more rolls (27) at once, each roll (27) being similarly mounted between the end plates (43).

11. A dispenser as claimed in any of the preceding Claims, which includes mounted thereon just ahead of the roll (27) being laid, a roller that will take out or level any indentations formed in the ground formation as the roll is dispensed.

## Patentansprüche

1. An einem Traktor montierbare Ausgabevorrichtung für eine Rolle von Material (27), wie beispielsweise einer geosynthetischem Tonauskleidung (65) oder einem geotextilen Gewebe, wobei die Ausgabevorrichtung folgende Bestandteile umfasst:
Einen langgestreckten Träger (41, 42) oder einen Rahmen aus den Trägern (41,42), welcher etwa zentral angeordnet eine Drei- Punkt- Anhängevorrichtung (39) aufweist mittels derer der Träger (41,42) oder Rahmen (41,42) an dem Traktor (32) derart angebracht werden kann, dass er sich dahinter quer erstreckt;
der Träger (41,42) trägt an beiden Enden je eine Platte (43), welche eine nach innen gerichtete Zapfeneinrichtung (404) zur Rollenmontage aufweist, derart, dass im Betrieb die Rolle des Materials (27) darauf und zwischen den Endplatten (43) getragen werden kann;
der Träger ist mit Positionierungssteuermitteln (61,62) verbunden, welche im Betrieb verwendbar sind, um eine Verstellung des lateralen Winkels der unteren Verbindungsglieder der Drei- Punkt- Anhängevorrichtung des Traktors zu bewirken und somit die Rolle (27) zu der einen oder anderen Seite zu bewegen, um im Betrieb abzuwandeln, wo die Auskleidung (65) abgelegt wird, **dadurch gekennzeichnet, dass** jeder einzelne Träger (41,42), welcher die Länge des Rahmens ausmacht teleskopisch ausgebildet ist und einen Zentralabschnitt (41) und zwei Endplattenabschnitte (42) aufweist; und dass die Ausgabevorrichtung ebenfalls zwei unabhängig voneinander gesteuerte Ausfahr/Einziehantriebseinrichtungen (47,48) aufweist, welche je betriebsmäßig mit einem entsprechenden Endplattenabschnitt (42) verbunden sind, wodurch die Endplatten (42) im Betrieb ausreichend in einem Abstand voneinander bringbar sind, um die Zapfeneinrichtungen (404) in die Enden der Rolle (27) einzuführen, wobei die Platten (43) dann eingefahren werden können, um die Zapfeneinrichtungen (404) innerhalb der Rolle (27) anzuordnen, um die Rolle (27) zu tragen, wobei jede Endplatte (43) bezüglich des Zentralabschnitts (41) des Trägers unabhängig bewegbar ist.

2. Ausgabevorrichtung nach Anspruch 1, welche einen Kastenrahmen aus den Trägern (41,42) aufweist, wobei die Endplatten (43) zwei einander gegenüberliegende (Seiten-) Flächen des Kastens bilden und eine obenliegende Fläche des Kastens durch ein Paar im Abstand angeordneter paralleler Träger (41,42) gebildet ist, welche zweckdienlich langgestreckt sind, um die für die gewählte Rolle (27) geeignete Länge zu liefern.

3. Ausgabevorrichtung nach einem der vorstehenden Ansprüche, wobei die Endplattenabschnitte (42) gleitbar im einander gegenüber liegenden Enden des Zentralabschnittes (41) gelagert sind, derart, dass die Endplattenabschnitte (42) bezüglich des Zentralabschnittes (41) nach innen oder außen bewegbar sind, und dann an ihrem Ort festlegbar sind, um somit die Gesamtlänge des ganzen Trägers (41,42) zu ändern, sodass in dieser leichter und wirksamer mehreren unterschiedlichen Rollen anpassbar ist.

4. Ausgabevorrichtung nach einem der vorstehenden Ansprüche, wobei jeder der Antriebe der Ausfahr/Einziehantriebseinrichtungen (47,48) des teleskopischen Trägers ein hydraulisch betätigter (Kolben im Zylinder)Druckkolben (47,48) ist, und dass das Gehäuse (48) des Druckkolbens auf dem Zentralabschnitt des Trägers (41) montiert ist, während die Kolbenstange (402) des Trägers, welche sich vom Kolben (47) in dem Gehäuse (48) erstreckt an der Endplatte (43) montiert ist, an welcher der (die) betreffenden Träger (42) angebracht ist (sind).

5. Ausgabevorrichtung nach Anspruch 4, wobei jedes Druckkolbensystem (47,48) einen kurzhubigen Druckkolben verwendet und körperlich längs des Zentralabschnitts des Trägers (41) von einem Montagepunkt zum anderen verschiebbar ist, um dadurch im großem Maße unterschiedliche Rollenbreiten aufzunehmen.

6. Ausgabevorrichtung nach einem der vorstehenden Ansprüche, wobei jeder von einer Endplatte getragene Zapfen (404) tatsächlich aus zwei Teilen besteht, nämlich einer inneren Stange (404), die an der Endplatte (43) montiert ist und die auf Lagern eine umgebende Außenhülse (405) trägt, welche in den Hohlraum in der Rolle (27) passt.

7. Ausgabevorrichtung nach einem der vorstehenden Ansprüche, wobei die Drei- Punkt- Anhängevorrichtung (39) in der Mitte des Trägers (41) in ihrer Längsrichtung innerhalb dreißig Zentimetern (ein Fuß) auf beiden Seiten der tatsächlichen Mitte liegt.

8. Ausgabevorrichtung nach einem der vorstehenden Ansprüche, wobei die Positioniersteuereinrichtungen (61,62), welche im Betrieb verwendbar sind, um eine Verstellung des seitlichen Winkels der unteren Verbindungsglieder der Drei- Punkt- Anhängevorrichtung des Traktors zu verstellen und somit die Rolle (27) zu der einen oder anderen Seite zu verschieben, um zu verändern, wo im Betrieb die Auskleidung (65) abgelegt wird, als Antriebsvorrichtung einen hydraulischen Druckkolben (62) umfasst, welcher die Stelle einer der die Bewegung begrenzenden Ketten einnimmt, welche üblicherweise zusammen mit dem Drei- Punkt- Anhängearmen verwendet werden, wobei der Druckkolben (62) mit einer Steueranordnung in Form eines üblichen hebelbetätigten Hydraulikschalters (63) verbunden ist, welcher betriebsmäßig mit dem Druckkolben (62) verbunden ist und hinten und seitlich des Trägers (61) montiert ist.

9. Ausgabevorrichtung nach einem der vorstehenden Ansprüche, welche eine Messeinrichtung umfasst, durch welche bestimmt werden kann, wie viel Länge des Materials von der Rolle (27) ausgegeben wurde, und somit wie viel noch übrig ist.

10. Ausgabevorrichtung nach einem der vorstehende Ansprüche, welche ausgebildet ist, um zwei oder mehrere Rollen (27) gleichzeitig zu handhaben, wobei jede Rolle (27) gleichermaßen zwischen den Endplatten (43) montiert ist.

11. Ausgabevorrichtung nach einem der vorstehenden Ansprüche, welche unmittelbar vor der Rolle (27), welche abgelegt wird montiert eine Walze enthält, die irgendwelche Vertiefungen, die in der Bodenformation vorliegen, ausgleicht oder einebnet während die Rolle ausgegeben wird.

## Revendications

1. Distributeur, pouvant être monté sur un tracteur, d'un rouleau de matériau (27) tel qu'une membrane géosynthétique et d'argile (65) ou un tissu géotextile, le distributeur comprenant :
une poutre allongée (41, 42), ou une charpente de poutres (41, 42), présentant grossièrement au centre de celle-ci une monture à trois points (39) par laquelle la poutre (41, 42) ou la charpente (41, 42) peut être fixée au tracteur (32), de manière à s'étendre dans le sens latéral derrière celui-ci ;
la poutre (41, 42) supportant à chaque extrémité une plaque (43) présentant des moyens formant tourillon (404) à monture de rouleau dirigés vers l'intérieur, de telle sorte qu'en l'utilisation, le rouleau de matériau (27) peut être porté sur ceux-ci et entre les plaques d'extrémité (43) ;
la poutre (41, 42) étant associée à des moyens de commande de positionnement (61, 62) qui peuvent, en fonctionnement, être utilisés pour effectuer le réglage de l'angle latéral des liaisons inférieures de la monture à trois points du tracteur, et ainsi pour déplacer le rouleau (27) vers un côté ou l'autre pour modifier l'endroit où, en l'utilisation, le revêtement (65) est posé ; **caractérisé en ce que** :
chaque poutre individuelle (41, 42) composant la longueur de la charpente est télescopique, comprend une partie centrale (41) et deux parties de plaque d'extrémité (42) ;
et le distributeur comprend également deux moyens d'entraînement d'extension/de rétraction (47, 48) commandés de manière indépendante, chacun étant raccordé de manière à fonctionner en liaison avec une partie de plaque d'extrémité respective (42) par laquelle les plaques d'extrémité (43) peuvent, en fonctionnement, être espacées les unes des autres suffisamment loin pour que les moyens formant tourillon (404) puissent être insérés à l'intérieur des extrémités du rouleau (27), et les plaques (43) être ensuite rétractées pour positionner les moyens formant tourillon (404) à l'intérieur du rouleau (27), de manière à supporter le rouleau (27), chaque plaque d'extrémité (43) étant mobile de façon indépendante par rapport à la partie centrale (41) de la poutre.

2. Distributeur selon la revendication 1 qui est une charpente de boîte de poutres (41, 42), **caractérisé en ce que** les plaques d'extrémité (43) forment deux faces (latérales) opposées de la boîte et une surface supérieure de la boîte est définie par une paire de poutres parallèles espacées (41, 42) allongées de manière appropriée pour donner la longueur appropriée au rouleau choisi (27).

3. Distributeur selon l'une quelconque des revendications précédentes, **caractérisé en ce que** les parties de plaque d'extrémité (42) sont montées de façon coulissante à l'intérieur des extrémités opposées de la partie centrale (41), de telle sorte que les parties de plaque d'extrémité (42) puissent être déplacées à l'intérieur ou à l'extérieur de la partie centrale (41), et ensuite fixées en place, de manière à modifier la longueur totale de l'ensemble de la poutre (41, 42), de sorte qu'elle puisse accueillir plus facilement et plus efficacement plusieurs rouleaux différents.

4. Distributeur selon quelconque l'une des revendications précédentes, **caractérisé en ce que** chaque moyen d'extension/de rétraction (47, 48) d'entraînement de rouleau télescopique est un vérin (type à piston) (47, 48) actionné de façon hydraulique, et le corps de vérin (48) est monté sur la partie centrale de la poutre (41), tandis que la tige de vérin (402) s'étendant depuis le piston (47) dans le corps (48) est montée sur la plaque d'extrémité (43) à laquelle est(sont) fixée(s) la(les) poutre(s) d'extrémité (42) correspondante(s).

5. Distributeur selon la revendication 4, **caractérisé en ce que** chaque système de vérin (47, 48) utilise un vérin d'éjection court, et peut être déplacé en entier le long de la partie centrale de la poutre (41), d'un point de montage à un autre, de manière à recevoir des largeurs de rouleau très différentes.

6. Distributeur selon l'une quelconque des revendications précédentes, **caractérisé en ce que** chaque tourillon (404) porté par la plaque d'extrémité est effectivement composé de deux parties, une tige interne (404) montée sur la plaque d'extrémité (43) et supportant sur des roulements autour de celle-ci une gaine externe (405) qui s'ajuste à l'intérieur de l'espace creux au sein du rouleau (27).

7. Distributeur selon l'une quelconque des revendications précédentes, **caractérisé en ce que** le montage à trois points (39) au centre de la poutre (41) dans sa direction de longueur est à 30 cm (un pied) de chaque côté du vrai centre.

8. Distributeur selon l'une quelconque des revendications précédentes, **caractérisé en ce que** les moyens de commande de positionnement (61, 62) qui peuvent, en fonctionnement, être utilisés pour effectuer le réglage de l'angle latéral des liaisons inférieures du montage à trois points du tracteur, et ainsi pour déplacer le rouleau (27) sur un côté ou l'autre pour modifier l'endroit où, en l'utilisation, le revêtement (65) est posé, comprend comme dispositif d'entraînement un vérin hydraulique (62) prenant la place d'une des chaînes de restriction de mouvement habituellement utilisées avec les bras de montage à trois points, lequel vérin (62) est associé à un agencement de commande sous la forme d'un commutateur hydraulique conventionnel actionné par levier (63) raccordé de manière à fonctionner en liaison avec le vérin (62) et monté à l'arrière et sur le côté de la poutre (61).

9. Distributeur selon l'une quelconque des revendications précédentes, **caractérisé en ce qu'**il comprend des moyens de dosage, moyennant quoi il est possible de déterminer quelle longueur de matériau a été distribuée depuis le rouleau (27), et ainsi la quantité restante.

10. Distributeur selon l'une quelconque des revendications précédentes, **caractérisé en ce qu'**il est équipé pour manipuler deux rouleaux (27) ou plus à la fois, chaque rouleau (27) étant monté de manière similaire entre les plaques d'extrémité (43).

11. Distributeur selon l'une des revendications précédentes, **caractérisé en ce qu'**il comprend un rouleau presseur, monté sur celui-ci juste devant le rouleau (27) en train d'être posé, lequel rouleau presseur éliminera ou nivellera une empreinte quelconque formée dans la structure primaire à mesure que le rouleau est distribué.
